# EUROPEAN PATENT APPLICATION

(11) **EP 2 706 791 A1**
(43) Date of publication of application: **12.03.2014**
(21) Application number: 11864761.9
(22) Date of filing: 05.05.2011
(51) Int. Cl.: H04W 52/00, H04B 7/26

(54) **METHOD, USER EQUIPMENT AND BASE STATION FOR COMPENSATING POWER**

(71) Applicant: Fujitsu Limited, Kawasaki-shi, Kanagawa 211-8588 (JP)
(72) Inventor: LI, Hongchao, Beijing 100025 (CN); ZHANG, Yuantao, Beijing 100025 (CN); WANG, Yi, Beijing 100025 (CN); ZHOU, Hua, Beijing 100025 (CN); WU, Jianming, Beijing 100025 (CN)
(74) Representative: Reichl, Philipp
(86) International application number: PCT/CN2011/073679
(87) International publication number: WO 2012/149683

(57) **Abstract**

Embodiments of the present invention provide a power compensating method, user equipment and base station. The method comprises: receiving by the base station a pathloss value reported by the user equipment, or calculating the pathloss value according to a reference signal receiving power value reported by the user equipment; and compensating for power according to the pathloss value. With the embodiments of the present invention, power of signals may be compensated, and the power of the receiving side is made identical in uplink or downlink transmission, thereby multiplexing a transmission mode based on a codebook.

## Description

### Technical Field

The present invention relates to the field of wireless communications and, in particular to a power compensating method, user equipment and a base station.

### Background Art

In order to improve cell coverage and user's experience under a long-term evolution advanced (LTE-A) system and increase a throughput of the system and a data transmission rate of the user, a coordinated multi-point (CoMP) transmission or reception technology has been introduced. Such a technology makes a plurality of geographically distributed transmission points be coordinated to serve for one user, improving user's performance experience.

Furthermore, in an LTE-A system, some heterogeneous network nodes different from conventional cellular networks have been introduce. These heterogeneous network nodes, such as a home eNodeB (HeNB), a hotspot coverage picocell, and a radio remote head (RRH), etc., use relatively low transmission power to cover a specific area or a user. These heterogeneous network nodes are relatively flexible in networking, and improve user's experience to a relatively high extent if deployed reasonably.

The operational mode of the CoMP may be divided into two kinds: CS/CB (coordinated scheduling and/or beamforming) and JP (joint processing/transmission). CS/CB denotes that only one transmission point transmits data for UE at the same time, and JP denotes that a plurality of transmission points transmit data for UE at the same time. The type of a transmission point may be a conventional macro cellular base station or an RRH, and may also be a heterogeneous network node, such as a pico base station, etc. The transmission point may be a high-power node, and may also be a low-power node. If the CoMP operates in the JP mode and an antenna with a plurality of geographically distributed transmission points is used, the antenna may be taken as a joint multi-antenna to increase a channel capacity of a user.

However, in the implementation of the present invention, the inventors found that following problems will occur if a transmission mode based on a codebook in existing standards is used in the above CoMP joint multi-antenna technology:
An existing codebook is designed by default based on a scenario that a plurality of antennas are located at the same geographical position, that is, a conventional codebook is designed on an assumption that amplitudes of elements in a channel matrix H are consistent. However, in an application scenario of the CoMP joint multi-antenna technology, as the coordinated transmission points are distributed, the distances between each of antenna ports and UE are different;

Especially in a heterogeneous network where transmission power of the transmission points is different, the receiving power of the antenna ports in the receiving side is different, which will result in that the amplitudes of the elements in the channel matrix H are different. An existing codebook is not adapted to such channel properties, and an expected effect cannot be achieved.

It should be noted that the above description of the background art is merely provided for clear and complete explanation of the present invention and for easy understanding by those skilled in the art. And it should not be understood that the above technical solution is known to those skilled in the art as it is described in the background art of the present invention.

### Summary of the Invention

Embodiments of the present invention provide a power compensating method, user equipment and a base station, with an object being to compensate for the power of a downlink signal or an uplink signal.

According to an aspect of the embodiments of the present invention, there is provided a power compensating method, which is applicable to a communication system in which a base station and a coordinated node jointly serve for user equipment, the method comprising:
a first numerical value acquiring process for receiving, by the base station, a pathloss value reported by the user equipment, or calculating the pathloss value according to a reference signal receiving power value reported by the user equipment, the pathloss value being used to indicate a power loss of a signal between the user equipment and a base station side; and
a first power compensating process for compensating, by the base station, for power of an uplink signal from the user equipment according to the pathloss value.

According to another aspect of the embodiments of the present invention, there is provided a power compensating method, comprising:
a first numerical value measuring process for measuring, by user equipment, a reference signal receiving power value;
a first numerical value calculating process for calculating a pathloss value according to the measured reference signal receiving power value, the pathloss value being used to indicate a power loss of a signal between the user equipment and a base station side; and
a first numerical value reporting process for reporting to the base station the pathloss value or the reference signal receiving power value.

According to a further aspect of the embodiments of the present invention, there is provided a power compensating method, which is applicable to a communication system in which a base station and a coordinated node jointly serve for user equipment, the method comprising:
a second numerical value acquiring process for receiving, by the base station, a pathloss value reported by the user equipment, or calculating the pathloss value according to a reference signal receiving power value reported by the user equipment, the pathloss value being used to indicate a power loss of a signal between the user equipment and a base station side; and
a second power compensating process for compensating, by the base station, for power of a downlink signal transmitted to the user equipment according to the pathloss value.

According to still another aspect of the embodiments of the present invention, there is provided a power compensating method, which is applicable to a communication system in which a base station and a coordinated node jointly serve for user equipment, the method comprising:
a second numerical value measuring process for measuring, by user equipment, a reference signal receiving power value;
a second numerical value calculating process for calculating a pathloss value according to the measured reference signal receiving power value, the pathloss value being used to indicate a power loss of a signal between the user equipment and a base station side; and
a third power compensating process for compensating, by the user equipment, for power of a downlink signal from the base station side according to the pathloss value.

According to still another aspect of the embodiments of the present invention, there is provided a base station, which is applicable to a communication system in which the base station and a coordinated node jointly serve for user equipment, the base station comprising:
a first numerical value acquirer, configured to receive a pathloss value reported by the user equipment, or calculate the pathloss value according to a reference signal receiving power value reported by the user equipment, the pathloss value being used to indicate a power loss of a signal between the user equipment and a base station side; and
a first power compensator, configured to compensate for power of an uplink signal from the user equipment according to the pathloss value.

According to still another aspect of the embodiments of the present invention, there is provided user equipment, comprising:
a first numerical value measurer, configured to measure a reference signal receiving power value;
a first numerical value calculator, configured to calculate a pathloss value according to the measured reference signal receiving power value, the pathloss value being used to indicate a power loss of a signal between the user equipment and a base station side; and
a first numerical value reporter, configured to report to the base station the pathloss value or the reference signal receiving power value.

According to still another aspect of the embodiments of the present invention, there is provided a base station, which is applicable to a communication system in which the base station and a coordinated node jointly serve for user equipment, the base station comprising:
a second numerical value acquirer, configured to receive a pathloss value reported by the user equipment, or to calculate the pathloss value according to a reference signal receiving power value reported by the user equipment, the pathloss value being used to indicate a power loss of a signal between the user equipment and a base station side; and
a second power compensator, configured to compensate for power of a downlink signal transmitted to the user equipment according to the pathloss value.

According to still another aspect of the embodiments of the present invention, there is provided user equipment, which is applicable to a communication system in which a base station and a coordinated node jointly serve for the user equipment, the user equipment comprising:
a second numerical value measurer, configured to measure a reference signal receiving power value;
a second numerical value calculator, configured to calculate a pathloss value according to the measured reference signal receiving power value, the pathloss value being used to indicate a power loss of a signal between the user equipment and a base station side; and
a third power compensator, configured to compensate for power of a downlink signal from the base station side according to the pathloss value.

According to still another aspect of the embodiments of the present invention, there is provided a computer-readable program, wherein when the program is executed in a base station, the program enables the computer to carry out the power compensating method above-mentioned in the base station.

According to still another aspect of the embodiments of the present invention, there is provided a storage medium in which a computer-readable program is stored, wherein the computer-readable program enables the computer to carry out the power compensating method above-mentioned in a base station.

According to still another aspect of the embodiments of the present invention, there is provided a computer-readable program, wherein when the program is executed in user equipment, the program enables the computer to carry out the power compensating method above-mentioned in the user equipment.

According to still another aspect of the embodiments of the present invention, there is provided a storage medium in which a computer-readable program is stored, wherein the computer-readable program enables the computer to carry out the power compensating method above-mentioned in user equipment.

The advantages of the embodiments of the present invention exist in: a base station side or a user equipment side may compensate for power of a signal according to a pathloss value or a reference signal receiving power value, so that the power of the receiving side in uplink transmission or downlink transmission is identical, thereby multiplexing a transmission mode based on a codebook.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Many aspects of the present invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be enlarged or reduced.

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.
Figure 1 is a schematic diagram of precoding processing in a downlink;
Figure 2 is a schematic diagram of decoding processing in an uplink;
Figure 3 is a flowchart of the power compensating method of Embodiment 1 of the present invention;
Figure 4 is another flowchart of the power compensating method of Embodiment 1 of the present invention;
Figure 5 is another flowchart of the power compensating method of Embodiment 1 of the present invention;
Figure 6 is a schematic diagram of the structure of the base station of Embodiment 1 of the present invention;
Figure 7 is another schematic diagram of the structure of the base station of Embodiment 1 of the present invention;
Figure 8 is a schematic diagram of the structure of the user equipment of Embodiment 1 of the present invention;
Figure 9 is a flowchart of the power compensating method of Embodiment 2 of the present invention;
Figure 10 is another flowchart of the power compensating method of Embodiment 2 of the present invention;
Figure 11 is a schematic diagram of the structure of the base station of Embodiment 2 of the present invention;
Figure 12 is another schematic diagram of the structure of the base station of Embodiment 2 of the present invention;
Figure 13 is a flowchart of the power compensating method of Embodiment 3 of the present invention;
Figure 14 is another flowchart of the power compensating method of Embodiment 3 of the present invention;
Figure 15 is a schematic diagram of the structure of the base station of Embodiment 3 of the present invention;
Figure 16 is another schematic diagram of the structure of the user equipment of Embodiment 3 of the present invention;
Figure 17 is a systematic composition view of the user equipment of an embodiment of the present invention; and
Figure 18 is another systematic composition view of the user equipment of an embodiment of the present invention.

### Detailed Description of the Invention

The foregoing and other features of the embodiments of the present invention will become apparent with reference to the drawings and the following description. In the description and drawings, particular embodiments of the present invention are disclosed, which show some embodiments in which the principle of the present invention may be employed. It should be understood that the present invention is not limited to the described embodiments, on the contrary, the present invention includes all the modifications, variants and the equivalents thereof falling within the scope of the appending claims.

The embodiments of the present invention shall be described taking an LTE-A system as an example, which relates to a multi-antenna enhancement technology, measurement mechanism and signaling interaction in heterogeneous network coordinated multi-point transmission and reception. However, it should be understood that the present invention is not limited to such a system, and is applicable to any systems employing coordinated multi-point technologies.

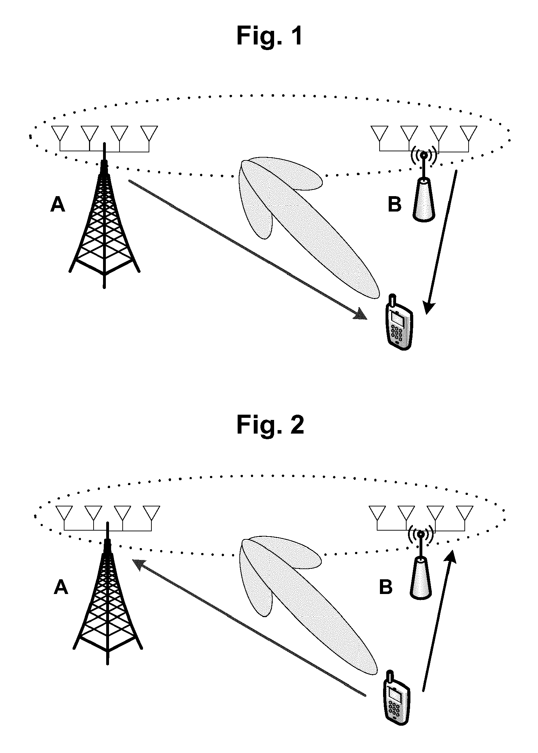

Fig. 1 is a schematic diagram of precoding processing in a downlink, and Fig. 2 is a schematic diagram of decoding processing in an uplink. As shown in Figs. 1 and 2, a base station side may comprise geographically distributed base station A and coordinated node B, which serve for UE; wherein the base station A may be a macro base station, which may comprise a plurality of antennas; and the node B may be a pico base station, an RRH, etc., and may also comprise a plurality of antennas.

Figs. 1 and 2 are illustrative only, and the systematic structure of the present invention is not limited thereto. For example, more transmission points may be included. It should be noted that the base station side in the present invention is described with respect to user equipment only, and may comprise a base station and a coordinated node.

### Embodiment 1

An embodiment of the present invention provides a power compensating method, applicable to compensating for power of an uplink signal. In order to maintain the backward compatibility of user equipment, the embodiment of the present invention compensates for power at a base station side.

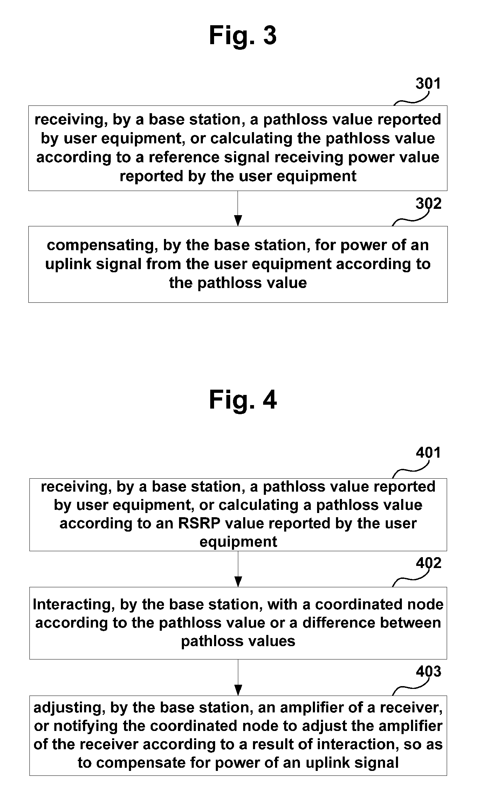

Fig. 3 is a flowchart of the power compensating method of an embodiment of the present invention, which is applicable to a communication system in which a base station and a coordinated node jointly serve for user equipment. As shown in Fig.3, the method comprises:
step 301: receiving, by the base station, a pathloss value reported by the user equipment, or calculating the pathloss value according to a reference signal receiving power value reported by the user equipment, the pathloss value being used to indicate a power loss of a signal between the user equipment and a base station side; and
step 302: compensating, by the base station, for power of an uplink signal from the user equipment according to the pathloss value.

In this embodiment, the reference signal receiving power (RSRP) is a key parameter representative of radio signal strength in an LTE-A network. The user equipment may acquire the RSRP value according to an existing standard, and the prior art may be used, which shall not be described herein any further.

In this embodiment, the user equipment may calculate the pathloss value according to the RSRP value, the pathloss value being used to indicate the power loss of the signal between the user equipment and the base station side. For example, the RSRP value may be -60dBm, and the power from the base station to the user equipment may be predefined as 30dBm, therefore, the user equipment may estimate the pathloss value as 90dB. The above estimation of the pathloss value is illustrative only. However, it is not limited thereto, and a particular manner of calculation may be determined as actually required.

In this embodiment, the user equipment may report the pathloss value to the base station. After receiving the pathloss value, the base station may compensate for receiving power according to the pathloss value. Or, the user equipment may report the RSRP value to the base station; and after receiving the RSRP value, the base station may estimate the pathloss value according to the RSRP value, and then compensate for the receiving power according to the pathloss value.

In particular implementation, the systematic structure may be as shown in Fig. 2, and the base station side may comprise a geographically distributed base station A and a coordinated node B.

In an embodiment, the base station and the coordinated node have different cell identities, and the base station A may be a macro base station, and the coordinated node B may be a pico base station. Fig. 4 is another flowchart of the power compensating method of the embodiment of the present invention. As shown in Fig. 4, the method comprises:
step 401: receiving, by a base station, a pathloss value reported by user equipment, or calculating a pathloss value according to an RSRP value reported by the user equipment;

In particular, the pathloss value may comprise a pathloss value of a signal from the user equipment to the base station, and a pathloss value of the signal from the user equipment to the coordinated node, and the base station may receive a plurality of pathloss values.

For example, the base station A may receive a pathloss value from the user equipment to the base station A and a pathloss value from the user equipment to the coordinated node B reported by the user equipment. It should be noted that in such a case, the base station A is needed to notify the transmission power of the coordinated node B to the user equipment, and the user equipment estimates the pathloss value from the user equipment to the coordinated node B according to the transmission power of the coordinated node B and the RSRP value of the coordinated node B.

Furthermore, it may also be that the user equipment reports the RSRP value of the coordinated node B to the base station A, and the base station A estimates the pathloss value from the user equipment to the coordinated node B according to the RSRP value of the coordinated node B and the transmission power of the coordinated node B.

Step 402: interacting, by the base station, with the coordinated node according to the pathloss value or a difference between pathloss values.

In this embodiment, the base station may interact with the coordinated node according to the pathloss value. The content of interaction may comprise: a pathloss value from the user equipment to the base station, and a pathloss value from the user equipment to the coordinated node, etc., or a difference therebetween, etc. This may be realized by using an upper layer signalling, and the prior art may be used, which shall not be described herein any further.

Step 403: adjusting, by the base station, an amplifier of a receiver, or notifying the coordinated node to adjust the amplifier of the receiver according to a result of interaction, so as to compensate for power of an uplink signal.

The above method shall be described below in detail by way of an example.

For example, the power of the uplink signals transmitted by the user equipment to the base station A and the coordinated node B is 24dBm. First, the pathloss value Passloss_A from the user equipment to the base station A is 90dB, and the pathloss value Pathloss_B from the user equipment to the coordinated node B is 80dB, reported by the user equipment; second, the base station A interacts with the coordinated node B according to Passloss_Aand Passloss_B, the content of the interaction may comprise 80dB and 90dB, or the difference 10 therebetween; last, the base station A adjusts the amplifier according to the result of interaction to amplify the uplink signal from the user equipment, so that the power of the uplink signal from the user equipment is changed from 24-90=-66dBm into -56dBm, while the power of the uplink signal from the user equipment received by the coordinated node B is unchanged, which is still 24-80=-56dBm. Therefore, the power of each receiving side is made identical in uplink transmission, and an existing codebook may be used.

The above power compensation of an uplink signal at the base station side is illustrative only. However, it is not limited thereto, and a particular mode of implementation may be determined as actually required.

In another embodiment, the base station and the coordinated node may have identical cell identity, and respectively have a plurality of antenna ports. The base station A may be a macro base station, and the coordinated node B may be an RRH.

In particular implementation, the plurality of antennas of the coordinated node B may be deemed as an extension of the base station A, and the base station A may control the antennas of the coordinated node B; that is, the base station A may have a plurality of different geographically distributed antenna ports. The prior art may be used for the particular control, which shall not be described any further.

Furthermore, step 301 may be: receiving by the base station pathloss values of a plurality of antenna ports reported by the user equipment, or calculating pathloss values of a plurality of antenna ports according to RSRP values of a plurality of antenna ports reported by the user equipment.

Furthermore, step 302 may be: adjusting amplifiers of a plurality of antenna ports by the base station according to the pathloss values of a plurality of antenna ports, so as to compensate for the power of the uplink signal from the user equipment.

The above method shall be described below by way of an example. For example, the power of the uplink signals transmitted by the user equipment to the base station A and the coordinated node B is 24dBm.

First, the base station A receives the pathloss values Pathloss_1=90dB, Pathioss_2=90.01dB, Pathloss_3=90.02dB and Pathloss_4=90.03dB of four antennal ports from the user equipment to the base station A, and the pathloss values Pathioss_5=80dB, Pathioss_6=80.51dB, Pathloss_7=80.52dB and Pathloss_8=80.53dB of four antennal ports from the user equipment to the coordinated node B, reported by the user equipment;
second, the base station A adjusts the amplifiers of the different antenna ports of the base station A and the coordinated node B to amplify the uplink signal from the user equipment according to the above Pathloss_1 - Pathloss_8, so that the power of the uplink signal received by antenna port 1 in the base station A is changed from -66dBm into -56dBm, the power of the uplink signal received by antenna port 2 is changed from -66.01dBm into -56dBm, the power of the uplink signal received by antenna port 3 is changed from -66.02dBm into -56dBm, and the power of the uplink signal received by antenna port 4 is changed from -66.03dBm into -56dBm;
while antenna 5 in the coordinated node B is not adjusted and the power of the received uplink signal is still -56dBm, the power of the uplink signal received by antenna port 6 is changed from -56.51dBm into -56dBm, the power of the uplink signal received by antenna port 7 is changed from -56.52dBm into -56dBm, and the power of the uplink signal received by antenna port 8 is changed from -56.53dBm into -56dBm. Therefore, the power of the antenna ports of the receiving side in uplink transmission is made identical, and an existing codebook may be used.

The above power compensation of an uplink signal at the base station side is illustrative only. However, it is not limited thereto, and a particular mode of implementation may be determined as actually required.

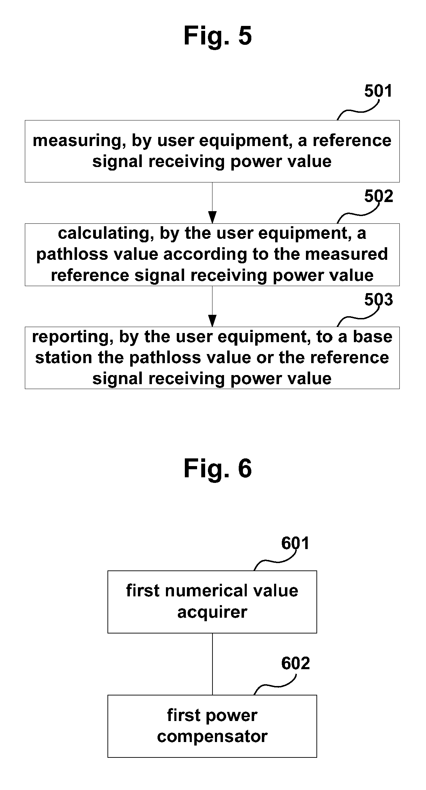

An embodiment of the present invention further provides a power compensating method, which is applicable to a user equipment side. Fig. 5 is another flowchart of the power compensating method of the embodiment of the present invention. As shown in Fig. 5, the method comprises:
step 501: measuring, by user equipment, a reference signal receiving power value;
step 502: calculating a pathloss value according to the measured reference signal receiving power value, the pathloss value being used to indicate a power loss of a signal between the user equipment and a base station side; and
step 503: reporting the pathloss value or the reference signal receiving power value by the user equipment to the base station.

It can be seen from the above embodiment that the base station side may compensate for power of an uplink signal according to the pathloss value or the reference signal receiving power value reported by the user equipment, so that the power at the receiving side in uplink transmission is made identical, thereby multiplexing a transmission mode based on a codebook.

An embodiment of the present invention further provides a base station, configured to compensate for power of an uplink signal. Fig. 6 is a schematic diagram of the structure of the base station of the embodiment of the present invention, which is applicable to a communication system in which the base station and a coordinated node jointly serve for user equipment.

As shown in Fig. 6, the base station comprises: a first numerical value acquirer 601 and a first power compensator 602; wherein,
the first numerical value acquirer 601 is configured to receive a pathloss value reported by the user equipment, or calculate the pathloss value according to a reference signal receiving power value reported by the user equipment, the pathloss value being used to indicate a power loss of a signal between the user equipment and the base station side; and
the first power compensator 602 is configured to compensate for power of an uplink signal from the user equipment according to the pathloss value.

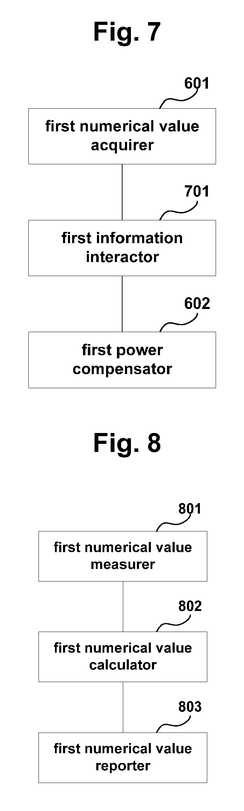

In a mode of implementation, the base station and the coordinated node have different cell identity. Fig. 7 is another schematic diagram of the structure of the base station of the embodiment of the present invention. As shown in Fig. 7, the base station comprises: a first numerical value acquirer 601 and a first power compensator 602, as described above.

In this embodiment, the pathloss value comprises a pathloss value of a signal from the user equipment to the base station, and a pathloss value of a signal from the user equipment to the coordinated node. As shown in Fig. 7, the base station may further comprise a first information interactor 701;
the first information interactor 701 is configured to interact with the coordinated node according to the pathloss value from the user equipment to the base station and the pathloss value from the user equipment to the coordinated node, or the difference between the two pathloss values;
and the first power compensator 602 is further configured to adjust an amplifier of a receiver according to an interacting result, or notify the coordinated node to adjust an amplifier of a receiver, so as to compensate for the power of the uplink signal.

In another mode of implementation, the base station and the coordinated node have identical cell identity, and respectively have plurality of different antenna ports;
the first numerical value acquirer 601 is configured to receive pathloss values of a plurality of antenna ports reported by the user equipment, or calculate pathloss values of a plurality of antenna ports according to reference signal receiving power value of a plurality of antenna ports reported by the user equipment;
and the first power compensator 602 is configured to adjust amplifiers of different antenna ports according to the pathloss values of a plurality of antenna ports, so as to compensate for the power of the uplink signal.

An embodiment of the present invention further provides user equipment, configured to compensate for power of an uplink signal. Fig. 8 is a schematic diagram of the structure of the user equipment of the embodiment of the present invention. As shown in Fig. 8, the user equipment comprises a first numerical value measurer 801, a first numerical value calculator 802 and a first numerical value reporter 803; wherein,
the first numerical value measurer 801 is configured to measure a reference signal receiving power value;
the first numerical value calculator 802 is configured to calculate a pathloss value according to the measured reference signal receiving power value, the pathloss value being used to indicate a power loss of a signal between the user equipment and a base station side; and
the first numerical value reporter 803 is configured to report to the base station the pathloss value or the reference signal receiving power value.

It can be seen from the above embodiment that the base station side may compensate for power of an uplink signal according to the pathloss value or the reference signal receiving power value reported by the user equipment, so that the power at the receiving side in uplink transmission is made identical, thereby multiplexing a transmission mode based on a codebook.

### Embodiment 2

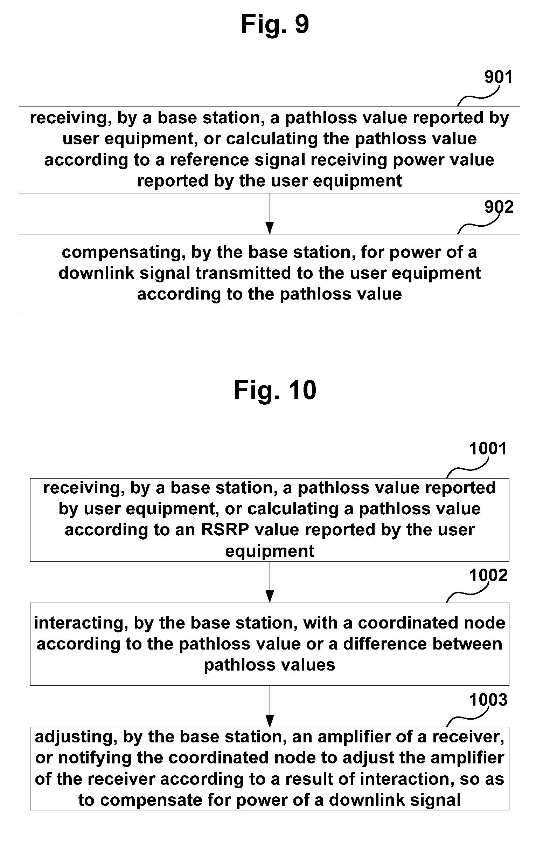

An embodiment of the present invention provides a power compensating method, applicable to compensating for power of a downlink signal from a base station side. Fig. 9 is a flowchart of the power compensating method of the embodiment of the present invention, which is applicable to a communication system in which a base station and a coordinated node jointly serve for user equipment.

As shown in Fig. 9, the method comprises:
step 901: receiving, by the base station, a pathloss value reported by the user equipment, or calculating the pathloss value according to a reference signal receiving power value reported by the user equipment, the pathloss value being used to indicate a power loss of a signal between the user equipment and the base station side; and
step 902: compensating, by the base station, for power of a downlink signal transmitted to the user equipment according to the pathloss value.

In this embodiment, the user equipment may report the pathloss value to the base station. The base station may compensate for the transmission power according to the pathloss value after receiving the pathloss value. Or the user equipment may report an RSRP value to the base station, the base station estimates the pathloss value according to the RSRP value, and then compensate for the receiving power according to the RSRP value.

In particular implementation, the systematic structure may be as shown in Fig. 1, and the base station side may comprise a geographically distributed base station A and a coordinated node B.

In an embodiment, the base station A and the coordinated node B have different cell identity, and base station A may be a macro base station, and the coordinated node B may be a pico base station. Fig. 10 is another flowchart of the power compensating method of the embodiment of the present invention. As shown in Fig. 10, the method comprises:
step 1001: receiving, by a base station, a pathloss value reported by user equipment, or calculating a pathloss value according to an RSRP value reported by user equipment;

in particular, the pathloss value may comprise a pathloss value of a signal from the base station to the user equipment, and a pathloss value of the signal from the coordinated node to the user equipment, and the base station may receive multiple pathloss values.

For example, the base station A may receive a pathloss value from the base station A to the user equipment and a pathloss value from the coordinated node B to the user equipment, reported by the user equipment. It should be noted that in such a case, the base station A is needed to notify the transmission power of the coordinated node B to the user equipment, and the user equipment estimates the pathloss value from the coordinated node B to the user equipment according to the transmission power of the coordinated node B and the RSRP value of the coordinated node B.

Furthermore, it may also be that the user equipment reports the RSRP value of the coordinated node B to the base station A, and the base station A estimates the pathloss value from the coordinated node B to the user equipment according to the RSRP value of the coordinated node B and the transmission power of the coordinated node B.

Step 1002: interacting by the base station with the coordinated node according to the pathloss value or a difference between pathloss values.

In particular, the base station may interact with the coordinated node according to the pathloss value, the content of interaction may comprise: a pathloss value from the base station to the user equipment, and a pathloss value from the coordinated node to the user equipment, etc., or a difference therebetween, etc. This may be realized by using an upper layer signalling via an X2 port, and the prior art may be used, which shall not be described herein any further.

Step 1003: adjusting an amplifier of a receiver by the base station, or notifying the coordinated node to adjust the amplifier of the receiver according to a result of interaction, so as to compensate for power of the downlink signal.

The above method shall be described below in detail by way of an example.

For example, the power of the downlink signals transmitted by the base station A to the user equipment is 45dBm, and the power of the downlink signals transmitted by the coordinated node B to the user equipment is 30dBm. First, the pathloss value Passloss_A received by the base station A from the base station A to the user equipment is 90dB, and the pathloss value Pathloss_B from the coordinated node B to the user equipment is 80dB, reported by the user equipment; second, the base station A interacts with the coordinated node B according to Passloss_A and Passloss_B; last, the base station A adjusts the amplifier of a transmitter according to the result of interaction, to adjust the transmission power from 45dBm to 40dBm, so that the power of the downlink signal transmitted at the user equipment is changed from -45dBm into -50dBm, while the power of the downlink signal transmitted by the coordinated node B to the user equipment is unchanged, which is still -50dBm. Therefore, the power of the signals received by the user equipment from the base station and the coordinated node may be made identical in downlink transmission, and an existing codebook may be used.

The above power compensation of a downlink signal at the base station side is illustrative only. However, it is not limited thereto, and a particular mode of implementation may be determined as actually required.

In another embodiment, the base station A and the coordinated node B may have identical cell identity, and respectively have plurality of antenna ports. The base station A may be a macro base station, and the coordinated node B may be an RRH.

In particular implementation, the plurality of antennas of the coordinated node B may be deemed as an extension of the base station A, and the base station A may control the antennas of the coordinated node B; that is, the base station A may have a plurality of different geographically distributed antenna ports. The prior art may be used for the particular control, which shall not be described any further.

Furthermore, step 901 may be: receiving, by the base station, pathloss values of a plurality of antenna ports reported by the user equipment, or calculating pathloss values of a plurality of antenna ports according to reference signal receiving power values of a plurality of antenna ports reported by the user equipment.

Furthermore, step 902 may be: allocating, by the base station, different transmission power for different antenna ports according to the pathloss values of a plurality of antenna ports.

The above method shall be described below by way of an example. For example, it is assumed that before power compensation, the power of the downlink signals transmitted by the antenna ports of the base station A to the user equipment is 45dBm, and the power of the downlink signals transmitted by the antenna ports of the coordinated node B to the user equipment is 30dBm.

First, the base station A receives the pathloss values Pathloss_1=90dB, Pathloss_2=90.01dB, Pathloss_3=90.02dB and Pathloss_4=90.03dB from the four antennal ports in the base station A to the user equipment, and the pathloss values Pathloss_5=80dB, Pathioss_6=80.51dB, Pathloss_7=80.52dB and Pathloss_8= 80.53dB from four antennal ports in the coordinated node B to the user equipment, reported by the user equipment;
second, the base station A adjusts the amplifiers of the different antenna ports of the transmitters in the base station A and the coordinated node B according to the above Pathloss_1 - Pathloss_8, making the antenna port 1 unchanged, and the power of the downlink signal transmitted by the antenna port 1 to the user equipment is 45dBm; thus, the power of the downlink signal received by the user equipment is -45dBm;
the power of the downlink signal transmitted by the antenna port 2 to the user equipment is changed from 45dBm into 45.01dBm, the power of the downlink signal transmitted by the antenna port 3 to the user equipment is changed from 45dBm into 45.02dBm, the power of the downlink signal transmitted by the antenna port 4 to the user equipment is changed from 45dBm into 45.03dBm, the power of the downlink signal transmitted by the antenna port 5 to the user equipment is changed from 30dBm into 35dBm, the power of the downlink signal transmitted by the antenna port 6 to the user equipment is changed from 30dBm into 35.51dBm, the power of the downlink signal transmitted by the antenna port 7 to the user equipment is changed from 30dBm into 35.52dBm, and the power of the downlink signal transmitted by the antenna port 8 to the user equipment is changed from 30dBm into 35.53dBm; thus, the power of the downlink signals received by the user equipment from the antenna ports is -45dMB. Therefore, the power of the downlink signals received by the user equipment from the antenna ports is identical, and an existing codebook may be used.

The above power compensation of a downlink signal at the base station side is illustrative only. However, it is not limited thereto, and a particular mode of implementation may be determined as actually required.

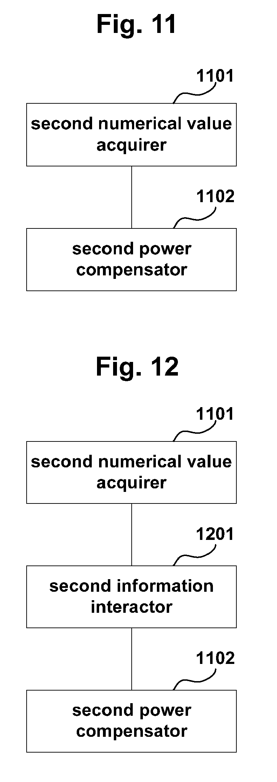

An embodiment of the present invention further provides a base station, configured to compensate for power of a downlink signal. Fig. 11 is a schematic diagram of the structure of the base station of the embodiment of the present invention, which is applicable to a communication system in which the base station and a coordinated node jointly serve for user equipment.

As shown in Fig. 11, the base station comprises: a second numerical value acquirer 1101 and a second power compensator 1102; wherein,
the second numerical value acquirer 1101 is configured to receive a pathloss value reported by the user equipment, or to calculate the pathloss value according to a reference signal receiving power value reported by the user equipment, the pathloss value being used to indicate a power loss of a signal between the user equipment and the base station side; and
the second power compensator 1102 is configured to compensate for power of a downlink signal transmitted to the user equipment according to the pathloss value.

In a mode of implementation, the base station and the coordinated node have different cell identity. Fig. 12 is another schematic diagram of the structure of the base station of the embodiment of the present invention. As shown in Fig. 12, the base station comprises: a second numerical value acquirer 1101 and a second power compensator 1102, as described above.

In this embodiment, the pathloss value comprises a pathloss value of a signal from the base station to the user equipment, and a pathloss value of a signal from the coordinated node to the user equipment. As shown in Fig. 12, the base station may further comprise a second information interactor 1201;
the second information interactor 1201 is configured to interact with the coordinated node according to the pathloss value from the base station to the user equipment and the pathloss value from the coordinated node to the user equipment, or the difference between the two pathloss values;
and the second power compensator 1102 is further configured to adjust an amplifier of a transmitter according to an interacting result, or notify the coordinated node to adjust an amplifier of a transmitter, so as to compensate for the power of the downlink signal.

In another mode of implementation, the base station and the coordinated node have identical cell identity, and respectively have plurality of antenna ports, that is, the base station side has a plurality of geographically distributed different antenna ports;
the second numerical value acquirer 1101 is configured to receive pathloss values of a plurality of antenna ports reported by the user equipment, or calculate pathloss values of a plurality of antenna ports according to reference signal receiving power values of a plurality of antenna ports reported by the user equipment;
and the second power compensator 1102 is configured to allocate different transmission power for different antenna ports according to the pathloss values of a plurality of antenna ports.

It can be seen from the above embodiment that the base station side may compensate for power of a downlink signal according to the pathloss value or the reference signal receiving power value reported by the user equipment, so that the power at the receiving side in downlink transmission is made identical, thereby multiplexing a transmission mode based on a codebook.

### Embodiment 3

An embodiment of the present invention provides a power compensating method, applicable to compensating for power of a downlink signal from a user equipment side.

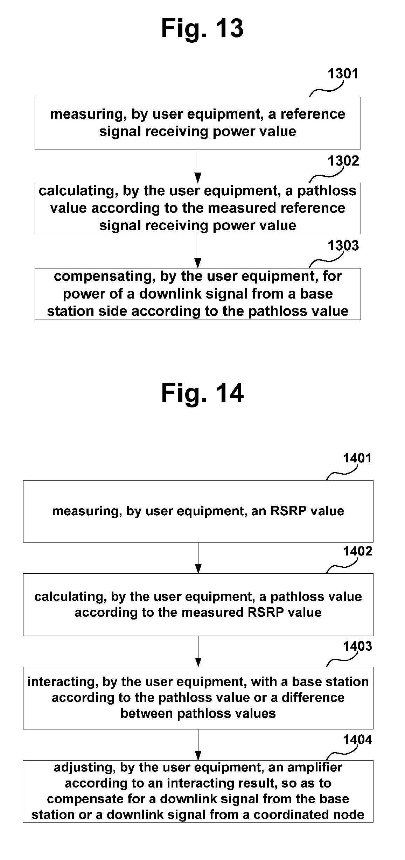

Fig. 13 is a flowchart of the power compensating method of the embodiment of the present invention, which is applicable to a communication system in which a base station and a coordinated node jointly serve for user equipment. As shown in Fig. 13, the method comprises:
step 1301: measuring, by user equipment, a reference signal receiving power value;
step 1302: calculating, by the user equipment, a pathloss value according to the measured reference signal receiving power value, the pathloss value being used to indicate a power loss of a signal between the user equipment and a base station side; and
step 1303: compensating, by the user equipment, for power of a downlink signal from the base station side according to the pathloss value.

In this embodiment, the user equipment may acquire the RSRP value according to an existing standard, and the prior art may be used, which shall not be described herein any further. And the pathloss value may be estimated according to the RSRP value, as described in Embodiment 1. Then the user equipment may compensate for the power of the downlink signal according to the pathloss value.

In particular implementation, the systematic structure may be as shown in Fig. 1, and the base station side may comprise a geographically distributed base station A and a coordinated node B.

In an embodiment, the base station A and the coordinated node B have different cell identity. The base station A may be a macro base station, and the coordinated node B may be a pico base station. Fig. 14 is another flowchart of the power compensating method of the embodiment of the present invention. As shown in Fig. 14, the method comprises:
step 1401: measuring, by user equipment, an RSRP value;
step 1402: calculating, by the user equipment, a pathloss value according to the measured RSRP value;

In particular, the pathloss value may comprise a pathloss value of a signal from the base station to the user equipment, and a pathloss value of the signal from the coordinated node to the user equipment;
step 1403: interacting by the user equipment with the base station according to the pathloss value or a difference between pathloss values;

In particular, the base station may configure the user equipment with a measurement event, so that a measurement report is sent to a base station of the serving cell when the serving cell signal and coordinated cell signal measured by the user equipment satisfy a certain condition. This may be realized by using an upper layer signalling, and the prior art may be used, which shall not be described herein any further.

step 1404: adjusting an amplifier by the user equipment according to an interacting result, so as to compensate for a downlink signal from the base station or a downlink signal from the coordinated node.

The above method shall be described below in detail by way of an example.

For example, the power of the downlink signals transmitted by the base station A to the user equipment is 45dBm, and the power of the downlink signals transmitted by the coordinated node B to the user equipment is 30dBm. First, the pathloss value Passloss_A from the base station A to the user equipment is 90dB, and the pathloss value Pathloss_B from the coordinated node B to the user equipment is 80dB, obtained by the user equipment; second, the user equipment interacts with the base station A according to Passloss_A and Passloss_B; last, the user equipment adjusts the amplifier according to the result of interaction, so that the power of the downlink signal transmitted by the base station A at the user equipment is changed from -45dBm into -50dBm, while the power of the downlink signal transmitted by the coordinated node B at the user equipment is unchanged, which is still -50dBm. Therefore, the power of the signals received by the user equipment from the transmitting sides may be made identical in downlink transmission, and an existing codebook may be used.

The above power compensation of a downlink signal at the user equipment side is illustrative only. However, it is not limited thereto, and a particular mode of implementation may be determined as actually required.

In another embodiment, the base station A and the coordinated node B may have an identical cell identity, and respectively have plurality of antenna ports. The base station A may be a macro base station, and the coordinated node B may be an RRH.

In particular implementation, the plurality of antennas of the coordinated node B may be deemed as an extension of the base station A, and the base station A may control the antennas of the coordinated node B; that is, the base station A may have a plurality of different geographically distributed antenna ports. The prior art may be used for the particular control, which shall not be described any further.

Furthermore, step 1301 may be: measuring, by the user equipment, reference signal receiving power values of a plurality of antenna ports.

Furthermore, step 1302 may be: calculating, by the user equipment, pathloss values of a plurality of antenna ports according to the measured reference signal receiving power values of a plurality of antenna ports.

Furthermore, step 1303 may be: adjusting, by the user equipment, amplifiers according to the pathloss values of a plurality of antenna ports, so as to compensate for the downlink signals from different antenna ports.

In this embodiment, before step 1301, the method further comprises: receiving, by the user equipment, a notification transmitted by the base station for measuring the reference signal receiving power values of the plurality of antenna ports or for calculating the pathloss values of the plurality of antenna ports. The user equipment may measure the reference signal receiving power values of a plurality of antenna ports or calculate the pathloss values of a plurality of antenna ports according to the notification.

The above method shall be described below by way of an example. For example, it is assumed that before power compensation, the power of the downlink signals transmitted by the antenna ports of the base station A to the user equipment is 45dBm, and the power of the downlink signals transmitted by the antenna ports of the coordinated node B to the user equipment is 30dBm.

First, the user equipment acquires the pathloss values Pathloss_1=90dB, Pathloss_2=90.01dB, Pathloss_3=90.02dB and Pathloss_4=90.03dB from the four antennal ports in the base station A to the user equipment, and the pathloss values Pathloss_5=80dB, Pathioss_6=80.51dB, Pathloss_7=80.52dB and Pathloss_8= 80.53dB from four antennal ports in the coordinated node B to the user equipment;
second, the user equipment adjusts the amplifiers, making the power of the downlink signals received by the user equipment from the antenna ports to be -45dBm. Thus, the power of the downlink signal received by the user equipment from the antenna ports is identical in downlink transmission, and an existing codebook may be used.

The above power compensation of a downlink signal at the user equipment side is illustrative only. However, it is not limited thereto, and a particular mode of implementation may be determined as actually required.

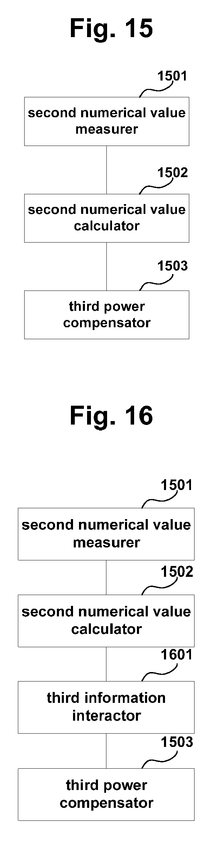

An embodiment of the present invention further provides user equipment, configured to compensate for power of a downlink signal. Fig. 15 is a schematic diagram of the structure of the user equipment of the embodiment of the present invention, applicable to a communication system in which a base station and a coordinated node jointly serve for the user equipment.

As shown in Fig. 15, the user equipment comprises a second numerical value measurer 1501, a second numerical value calculator 1502 and a third power compensator 1503; wherein,
the second numerical value measurer 1501 is configured to measure a reference signal receiving power value;
the second numerical value calculator 1502 is configured to calculate a pathloss value according to the measured reference signal receiving power value, the pathloss value being used to indicate a power loss of a signal between the user equipment and a base station side; and
the third power compensator 1503 is configured to compensate for power of a downlink signal from the base station side according to the pathloss value.

In a mode of implementation, the base station and the coordinated node have different cell identity. Fig. 16 is another schematic diagram of the structure of the user equipment of the embodiment of the present invention. As shown in Fig. 16, the user equipment comprises a second numerical value measurer 1501, a second numerical value calculator 1502 and a third power compensator 1503, as described above.

In this embodiment, the pathloss value comprises the pathloss value of the signal from the base station to the user equipment and the pathloss value of the signal from the coordinated node to the user equipment. As shown in Fig. 16, the user equipment may further comprise: a third information interactor 1601;
the third information interactor 1601 is configured to interact with the base station according to the pathloss value from the base station to the user equipment and the pathloss value from the coordinated node to the user equipment, or a difference between the two pathloss values;
and the third power compensator 1502 is configured to adjust an amplifier according to an interacting result to compensate for the power of the downlink signal from the base station or the downlink signal from the coordinated node.

In another mode of implementation, the base station and the coordinated node have identical cell identity, and have respectively a plurality of different antenna ports, that is that is, the base station side has a plurality of geographically distributed different antenna ports;
the second numerical value measurer 1501 is configured to acquire reference signal receiving power values of the plurality of antenna ports;
the second numerical value calculator 1502 is configured calculate the pathloss values of the plurality of antenna ports according to the measured reference signal receiving power values of the plurality of antenna ports; and
the third power compensator 1503 is configured to adjust amplifiers according to the pathloss values of the plurality of antenna ports to compensate for the power of the downlink signals from different antenna ports.

In this embodiment, the user equipment further comprises: a notification receiver configured to receive a notification transmitted by the base station for measuring the reference signal receiving power values of the plurality of antenna ports or for calculating the pathloss values of the plurality of antenna ports.

It can be seen from the above embodiment that the user equipment may compensate for power of a downlink signal after receiving the pathloss value or the reference signal receiving power value, so that the power of the signals received by the user equipment from the transmitting sides in downlink transmission is made identical, thereby multiplexing a transmission mode based on a codebook.

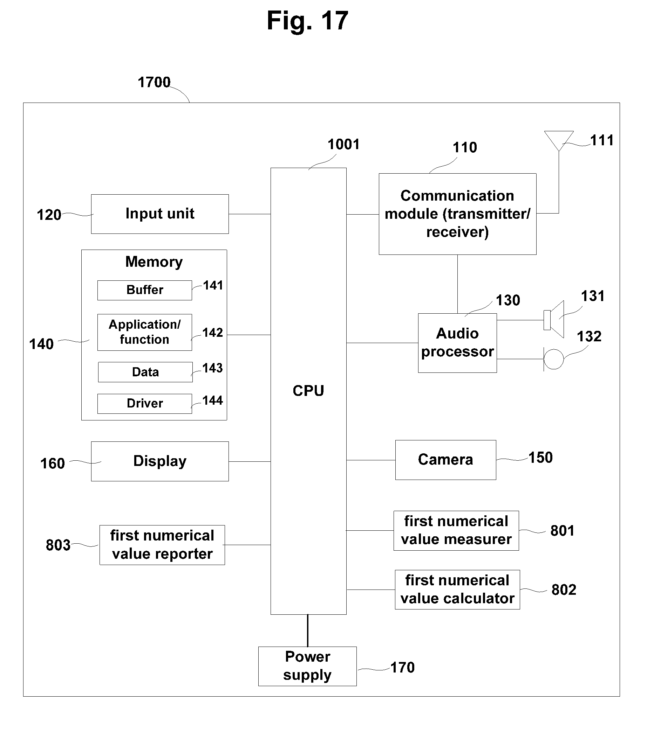

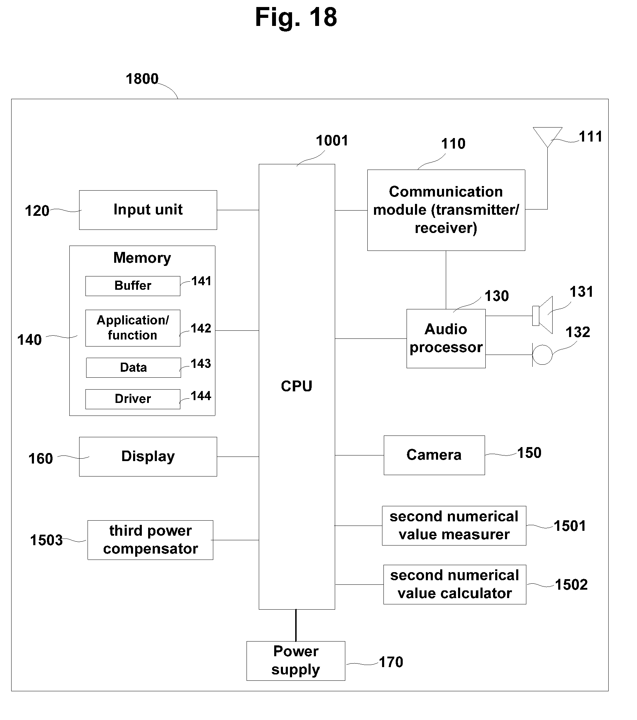

Fig. 17 is a schematic block diagram of the systematic composition of the user equipment 1700 of an embodiment of the present invention, which comprises a first numerical value measurer 801, a first numerical value calculator 802 and a first numerical value reporter 803 described in Embodiment 1. Fig. 18 is a schematic block diagram of the systematic composition of the user equipment 1800 of an embodiment of the present invention, which comprises a second numerical value measurer 1501, a second numerical value calculator 1502 and a third power compensator 1503 described in Embodiment 3.

Figs. 17 and 18 are illustrative only, and other types of structures may also be used for supplementing or replacing this structure, so as to implement the function of telecommunications or other functions.

As shown in Figs. 17 and 18, the user equipment 1700 and 1800 may further comprise a CPU 100, a communication module 110, an input unit 120, an audio processing unit 130, a memory 140, a camera 150, a display 160, and a power supply 170.

The CPU 100 (also referred to as a controller or an operational control, which may comprise a microprocessor or other processing devices and/or logic devices) receives input and controls each part and operation of the terminal equipment. The input unit 120 provides input to the CPU 1001. The input unit 120 may be for example a key or touch input device. The camera 150 is used to take image data and provide the taken image data to the CPU 1001 for use in a conventional manner, for example, for storage, and transmission, etc.

The power supply 170 is used to supply power to the terminal equipment. And the display 160 is used to display the objects of display, such as images, and characters, etc. The display may be for example an LCD display, but it is not limited thereto.

The memory 140 is coupled to the CPU 1001. The memory 140 may be a solid memory, such as a read-only memory (ROM), a random access memory (RAM), and a SIM card, etc., and may also be such a memory that stores information when the power is interrupted, may be optionally erased and provided with more data. Examples of such a memory are sometimes referred to as an EPROM, etc. The memory 140 may also be certain other types of devices. The memory 140 comprises a buffer memory 141 (sometimes referred to as a buffer). The memory 140 may comprise an application/function storing portion 142 used to store application programs and function programs, or to execute the flow of the operation of the mobile terminal 1000 via the CPU 1001.

The memory 140 may further comprise a data storing portion 143 used to store data, such as a contact person, digital data, pictures, voices and/or any other data used by the mobile terminal 1000. A driver storing portion 144 of the memory 140 may comprise various types of drivers of the terminal equipment for the communication function and/or for executing other functions (such as application of message transmission, and application of directory, etc.) of the terminal equipment.

The communication module 110 is a transmitter/receiver 110 transmitting and receiving signals via an antenna 111. The communication module (transmitter/receiver) 110 is coupled to the CPU 1001 to provide input signals and receive output signals, this being similar to the case in a conventional mobile phone.

A plurality of communication modules 110 may be provided in the same terminal equipment for various communication technologies, such a cellular network module, a Bluetooth module, and/or wireless local network module, etc. The communication module (transmitter/receiver) 110 is also coupled to a loudspeaker 131 and a microphone 132 via the audio processing unit 130, for providing audio output via the loudspeaker 131 and receiving the audio input from the microphone 132, thereby achieving common telecommunications function. The audio processing unit 130 is further coupled to the CPU 1001, thereby enabling the recording of voices in this device via the microphone 132 and playing the voices stored in this device via the loudspeaker 131.

An embodiment of the present invention further provides a computer-readable program, wherein when the program is executed in user equipment, the program enables the computer to carry out the power compensating method as described in embodiments 1-3 in the user equipment.

An embodiment of the present invention further provides a storage medium in which a computer-readable program is stored, wherein the computer-readable program enables the computer to carry out the power compensating method as described in embodiments 1-3 in user equipment.

An embodiment of the present invention further provides a computer-readable program, wherein when the program is executed in a base station, the program enables the computer to carry out the power compensating method as described in embodiments 1-3 in the base station.

An embodiment of the present invention further provides a storage medium in which a computer-readable program is stored, wherein the computer-readable program enables the computer to carry out the power compensating method as described in embodiments 1-3 in a base station.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A power compensating method, which is applicable to a communication system in which a base station and a coordinated node jointly serve for user equipment, the method comprising:
a first numerical value acquiring process for receiving, by the base station, a pathloss value reported by the user equipment, or calculating the pathloss value according to a reference signal receiving power value reported by the user equipment, the pathloss value being used to indicate a power loss of a signal between the user equipment and a base station side; and
a first power compensating process for compensating, by the base station, for power of an uplink signal from the user equipment according to the pathloss value.

2. The method according to claim 1, wherein the base station and the coordinated node have different cell identities, and the pathloss value comprises the pathloss value of the signal from the user equipment to the base station and the pathloss value of the signal from the user equipment to the coordinated node;
before the first power compensating process, the method further comprises:
a first information interacting process for interacting, by the base station, with the coordinated node according to the pathloss value from the user equipment to the base station and the pathloss value from the user equipment to the coordinated node, or a difference between the two pathloss values; and
the first power compensating process specifically comprises: adjusting, by the base station, an amplifier of a receiver, or notifying the coordinated node to adjust an amplifier of a receiver according to an interacting result, so as to compensate for the power of the uplink signal.

3. The method according to claim 1, wherein the base station and coordinated node have an identical cell identity, and have respectively a plurality of different antenna ports;
the first numerical value acquiring process specifically comprises: receiving, by the base station, the pathloss values of a plurality of antenna ports reported by the user equipment, or calculating the pathloss values of the plurality of antenna ports according to the reference signal receiving power values of the plurality of antenna ports reported by the user equipment; and
the first power compensating process specifically comprises: adjusting, by the base station, amplifiers of different antenna ports according to the pathloss values of the plurality of antenna ports, so as to compensate for the power of the uplink signals.

4. A power compensating method, comprising:
a first numerical value measuring process for measuring, by user equipment, a reference signal receiving power value;
a first numerical value calculating process for calculating a pathloss value according to the measured reference signal receiving power value, the pathloss value being used to indicate a power loss of a signal between the user equipment and a base station side; and
a first numerical value reporting process for reporting to the base station the pathloss value or the reference signal receiving power value.

5. A power compensating method, which is applicable to a communication system in which a base station and a coordinated node jointly serve for user equipment, the method comprising:
a second numerical value acquiring process for receiving, by the base station, a pathloss value reported by the user equipment, or calculating the pathloss value according to a reference signal receiving power value reported by the user equipment, the pathloss value being used to indicate a power loss of a signal between the user equipment and a base station side; and
a second power compensating process for compensating, by the base station, for power of a downlink signal transmitted to the user equipment according to the pathloss value.

6. The method according to claim 5, wherein the base station and the coordinated node have different cell identities, and the pathloss value comprises the pathloss value of the signal from the base station to the user equipment and the pathloss value of the signal from the coordinated node to the user equipment;
before the second power compensating process, the method further comprises:
a second information interacting process: interacting, by the base station, with the coordinated node according to the pathloss value from the base station to the user equipment and the pathloss value from the coordinated node to the user equipment, or a difference between the two pathloss values; and
the second power compensating process specifically comprises: adjusting, by the base station, an amplifier of a receiver, or notifying the coordinated node to adjust an amplifier of a receiver according to an interacting result, so as to compensate for the power of the downlink signal.

7. The method according to claim 5, wherein the base station and the coordinated node have an identical cell identity, and have respectively a plurality of different antenna ports;
the second numerical value acquiring process specifically comprises:
receiving, by the base station, the pathloss values of a plurality of antenna ports reported by the user equipment, or calculating the pathloss values of the plurality of antenna ports according to the reference signal receiving power values of the plurality of antenna ports reported by the user equipment; and
the second power compensating process specifically comprises: allocating, by the base station, different transmission power to the different antenna ports according to the pathloss values of the plurality of antenna ports.

8. A power compensating method, which is applicable to a communication system in which a base station and a coordinated node jointly serve for user equipment, the method comprising:
a second numerical value measuring process for measuring, by user equipment, a reference signal receiving power value;
a second numerical value calculating process for calculating a pathloss value according to the measured reference signal receiving power value, the pathloss value being used to indicate a power loss of a signal between the user equipment and a base station side; and
a third power compensating process for compensating, by the user equipment, for power of a downlink signal from the base station side according to the pathloss value.

9. The method according to claim 8, wherein the base station and the coordinated node have different cell identities, and the pathloss value comprises the pathloss value of the signal from the base station to the user equipment and the pathloss value of the signal from the coordinated node to the user equipment;
before the third power compensating process, the method further comprises:
a third information interacting process for interacting, by the user equipment, with the base station according to the pathloss value from the base station to the user equipment and the pathloss value from the coordinated node to the user equipment, or a difference between the two pathloss values; and
the third power compensating process specifically comprises: adjusting, by the user equipment, an amplifier according to an interacting result to compensate for the power of the downlink signal from the base station or the downlink signal from the coordinated node.

10. The method according to claim 8, wherein the base station and the coordinated node have an identical cell identity, and have respectively a plurality of different antenna ports;
the second numerical value measuring process specifically comprises: measuring, by the user equipment, the reference signal receiving power values of the plurality of antenna ports;
the second numerical value calculating process specifically comprises: calculating the pathloss values of the plurality of antenna ports according to the measured reference signal receiving power values of the plurality of antenna ports; and
the third power compensating process specifically comprises: adjusting, by the user equipment, amplifiers according to the pathloss values of the plurality of antenna ports to compensate for the power of the downlink signals from different antenna ports.

11. The method according to claim 10, wherein before the second numerical value measuring process, the method further comprises:
a notification receiving process for receiving, by the user equipment, a notification transmitted by the base station for measuring the reference signal receiving power values of the plurality of antenna ports or for calculating the pathloss values of the plurality of antenna ports.

12. A base station, which is applicable to a communication system in which the base station and a coordinated node jointly serve for user equipment, the base station comprising:
a first numerical value acquirer, configured to receive a pathloss value reported by the user equipment, or calculate the pathloss value according to a reference signal receiving power value reported by the user equipment, the pathloss value being used to indicate a power loss of a signal between the user equipment and a base station side; and
a first power compensator, configured to compensate for power of an uplink signal from the user equipment according to the pathloss value.

13. The base station according to claim 12, wherein the base station and the coordinated node have different cell identities, and the pathloss value comprises the pathloss value of the signal from the user equipment to the base station and the pathloss value of the signal from the user equipment to the coordinated node; and the base station further comprises:
a first information interactor, configured to interact with the coordinated node according to the pathloss value from the user equipment to the base station and the pathloss value from the user equipment to the coordinated node, or the difference between the two pathloss values; and
the first power compensator is configured to adjust an amplifier of a receiver according to the interacting result, or notify the coordinated node to adjust an amplifier of a receiver, so as to compensate for the power of the uplink signal.

14. The base station according to claim 12, wherein the base station and the coordinated node have an identical cell identity, and have respectively a plurality of different antenna ports;
the first numerical value acquirer is configured to receive the pathloss values of a plurality of antenna ports reported by the user equipment, or to calculate the pathloss values of the plurality of antenna ports according to the reference signal receiving power values of the plurality of antenna ports reported by the user equipment; and
the first power compensator is configured to adjust amplifiers of different antenna ports according to the pathloss values of the plurality of antenna ports, so as to compensate for the power of the uplink signals.

15. User equipment, comprising:
a first numerical value measurer, configured to measure a reference signal receiving power value;
a first numerical value calculator, configured to calculate a pathloss value according to the measured reference signal receiving power value, the pathloss value being used to indicate a power loss of a signal between the user equipment and a base station side; and
a first numerical value reporter, configured to report to the base station the pathloss value or the reference signal receiving power value.

16. A base station, which is applicable to a communication system in which the base station and a coordinated node jointly serve for user equipment, the base station comprising:
a second numerical value acquirer, configured to receive a pathloss value reported by the user equipment, or to calculate the pathloss value according to a reference signal receiving power value reported by the user equipment, the pathloss value being used to indicate a power loss of a signal between the user equipment and a base station side; and
a second power compensator, configured to compensate for power of a downlink signal transmitted to the user equipment according to the pathloss value.

17. The base station according to claim 16, wherein the base station and the coordinated node have different cell identities, and the pathloss value comprises the pathloss value of the signal from the base station to the user equipment and the pathloss value of the signal from the coordinated node to the user equipment; and the base station further comprises:
a second information interactor, configured to interact with the coordinated node according to the pathloss value from the base station to the user equipment and the pathloss value from the coordinated node to the user equipment, or the difference between the two pathloss values; and
the second power compensator is configured to adjust an amplifier of a transmitter, or notifying the coordinated node to adjust an amplifier of a transmitter according to an interacting result, so as to compensate for the power of the downlink signal.

18. The base station according to claim 16, wherein the base station and the coordinated node have an identical cell identity, and have respectively a plurality of different antenna ports;
the second numerical value acquirer is configured to receive the pathloss values of a plurality of antenna ports reported by the user equipment, or to calculate the pathloss values of the plurality of antenna ports according to the reference signal receiving power values of the plurality of antenna ports reported by the user equipment; and
the second power compensator is configured to allocate different transmission powers for different antenna ports according to the pathloss values of the plurality of antenna ports.

19. User equipment, which is applicable to a communication system in which a base station and a coordinated node jointly serve for the user equipment, the user equipment comprising:
a second numerical value measurer, configured to measure a reference signal receiving power value;
a second numerical value calculator, configured to calculate a pathloss value according to the measured reference signal receiving power value, the pathloss value being used to indicate a power loss of a signal between the user equipment and a base station side; and
a third power compensator, configured to compensate for power of a downlink signal from the base station side according to the pathloss value.

20. The user equipment according to claim 19, wherein the base station and the coordinated node have different cell identities, and the pathloss value comprises the pathloss value of the signal from the base station to the user equipment and the pathloss value of the signal from the coordinated node to the user equipment; and the user equipment further comprises:
a third information interactor, configured to interact with the base station according to the pathloss value from the base station to the user equipment and the pathloss value from the coordinated node to the user equipment, or the difference between the two pathloss values; and
the third power compensator is configured to adjust an amplifier according to an interacting result to compensate for the power of the downlink signal from the base station or the downlink signal from the coordinated node.

21. The user equipment according to claim 19, wherein the base station and the coordinated node have an identical cell identity, and have respectively a plurality of different antenna ports;
the second numerical value measurer is configured to acquire reference signal receiving power values of the plurality of antenna ports;
the second numerical value calculator is configured to calculate the pathloss values of the plurality of antenna ports according to the measured reference signal receiving power values of the plurality of antenna ports; and
the third power compensator is configured to adjust amplifiers according to the pathloss values of the plurality of antenna ports to compensate for the power of the downlink signals from different antenna ports.

22. The user equipment according to claim 21, wherein the user equipment further comprises:
a notification receiver, configured to receive a notification transmitted by the base station for measuring the reference signal receiving power values of the plurality of antenna ports or for calculating the pathloss values of the plurality of antenna ports.

23. A computer-readable program, wherein when the program is executed in a base station, the program enables the computer to carry out the power compensating method as claimed in any of claims 1-3 or 5-7 in the base station.

24. A storage medium in which a computer-readable program is stored, wherein the computer-readable program enables the computer to carry out the power compensating method as claimed in any of claims 1-3 or 5-7 in a base station.

25. A computer-readable program, wherein when the program is executed in user equipment, the program enables the computer to carry out the power compensating method as claimed in claim 4 or 8-11 in the user equipment.

26. A storage medium in which a computer-readable program is stored, wherein the computer-readable program enables the computer to carry out the power compensating method as claimed in claim 4 or 8-11 in a base station.
